# EUROPÄISCHE PATENTSCHRIFT

(11) **EP 0 792 412 B1**
(45) Veröffentlichungstag und Bekanntmachung des Hinweises auf die Patenterteilung: **04.10.2001**
(21) Anmeldenummer: 96919630.2
(22) Anmeldetag: 05.06.1996
(51) Int. Cl.: F02D 41/22, F02B 77/08, G01M 3/26

(54) **VERFAHREN ZUM BETRIEB EINER KRAFTSTOFFEINSPRITZEINRICHTUNG UND KRAFTSTOFFEINSPRITZEINRICHTUNG**
METHOD OF OPERATING A FUEL-INJECTION DEVICE AND FUEL-INJECTION DEVICE
PROCEDE D'UTILISATION D'UN DISPOSITIF D'INJECTION DE CARBURANT ET DISPOSITIF D'INJECTION DE CARBURANT

(30) Priorität: 14.09.1995 DE 19534051
(43) Veröffentlichungstag der Anmeldung: 03.09.1997
(73) Patentinhaber: ROBERT BOSCH GMBH, 70442 Stuttgart (DE)
(72) Erfinder: PFUHL, Berthold, D-71706 Markgröningen (DE); BURKEL, Rainer, D-71679 Asperg (DE); EYBERG, Wilhelm, D-71229 Leonberg (DE)
(86) Internationale Anmeldenummer: DE9600985
(87) Internationale Veröffentlichungsnummer: WO9710423

(56) Entgegenhaltungen:
- WO-A-95/06814
- DE-A- 1 922 986
- PATENT ABSTRACTS OF JAPAN vol. 017, no. 362 (M-1441), 8.Juli 1993 & JP,A,05 052146 (NIPPONDENSO CO LTD), 2.März 1993,
- PATENT ABSTRACTS OF JAPAN vol. 018, no. 579 (M-1698), 7.November 1994 & JP,A,06 213051 (NIPPONDENSO CO LTD), 2.August 1994,

## Beschreibung

### Stand der Technik

Die Erfindung geht aus von einem durch die US-PS 5 197 438 bekannten Verfahren zum Betrieb einer Kraftstoffeinspritzeinrichtung, bei der der Kraftstoff in meßbarer Menge unter Hochdruck in einen Hochdruckspeicher gefördert wird, dessen Druck durch ein Drucksteuerventil gesteuert wird und aus dem Kraftstoff zur Einspritzung über elektrisch gesteuerte Einspritzventile entnommen wird. Bei der in bekannter Weise betriebenen Kraftstoffeinspritzeinrichtung kann es vorkommen, daß das Kraftstoffhochdruckspeichersystem undicht wird, was insbesondere in bezug auf die hohen Einspritzdrücke zur Einspritzung von Kraftstoff bei fremdgezündeten Brennkraftmaschinen besonders kritisch ist.

Die JP-A-6 213 051 zeigt ein Kraftstoffeinspritzsystem, daß üblicherweise als Common-Rail-System bezeichnet wird. Um zu überprüfen, ob eine Leckage auftritt, wird in einem bestimmten Betriebszustand, in dem keine Einspritzung erfolgt und in dem kein Kraftstoff in den Speicher gefördert wird, überprüft, ob ein Druckabfall erfolgt. Erfolgt kein Druckabfall, so wird auf eine Leckage geschlossen. Bei dieser Vorgehensweise wird ein Betriebszustand abgewartet, bei dem ausgehend von einem Druckabfall auf eine Leckage geschlossen werden kann.

Eine Leckageerkennung ist nur dann möglich, wenn die besonderen Bedingungen vorliegen. Außerhalb dieser Betriebszustände ist eine Leckageerkennung nicht möglich. Wird im laufenden Betrieb dieser Betriebszustand nur selten oder gar nicht erreicht, so ist eine Prüfung unmöglich. Es kann daher der Fall eintreten, daß eine Leckage nicht erkannt wird.

### Vorteile der Erfindung

Mit dem erfindungsgemäßenVerfahren zum Betrieb einer Kraftstoffeinspritzeinrichtung der gattungsgemäßen Art ist es nun möglich, in exakter Weise automatisch festzustellen, wenn ein solches bekanntes Hochdrucksystem, insbesondere im Bereich des Hochdruckspeichers, undicht wird. Bei Auftreten einer Undichtigkeit kann dabei in vorteilhafter Weise gewarnt werden oder direkt ein entsprechender Eingriff in die Kraftstoffeinspritzeinrichtung zur Vermeidung weiterer Schäden vorgenommen werden.

In besonders vorteilhafter Weise wird dabei gemäß Patentanspruch 2 mittels einer Meßeinrichtung der zur Druckregelung des Kraftstoffdrucks im Hochdruckspeicher erforderliche abströmende Kraftstoff in seiner Menge erfaßt. Damit erhält man bei bekannter Zufuhr von auf Hochdruck gebrachtem Kraftstoff in den Kraftstoffhochdruckspeicher und bei bekannter Kraftstoffeinspritzmenge über die Einspritzventile eine exakte Bilanz von zugeführtem und abgeführtem Kraftstoff, die nur dann, wenn eine Leckage am Hochdruckspeicher auftritt, eine Abweichung von zugeführtem und abgeführtem Kraftstoff anzeigt. Vorteilhaft läßt sich dabei die sich aus Antriebsdrehzahl der Kraftstoffpumpe und deren konstanter Fördermenge pro Umdrehung der Antriebswelle ergebende geförderte Menge durch eine Steuereinrichtung leicht erfassen, und es liegen bereits die zur Steuerung von den Einspritzventilen notwendigen Signale vor, die der eingespritzten Kraftstoffmenge entsprechen.

In vorteilhafte Weiterbildung wird gemäß den Patentansprüchen 3 und 4 eine Kraftstoffeinspritzeinrichtung zur Durchführung des Verfahrens nach Patentanspruch 2 gegeben.

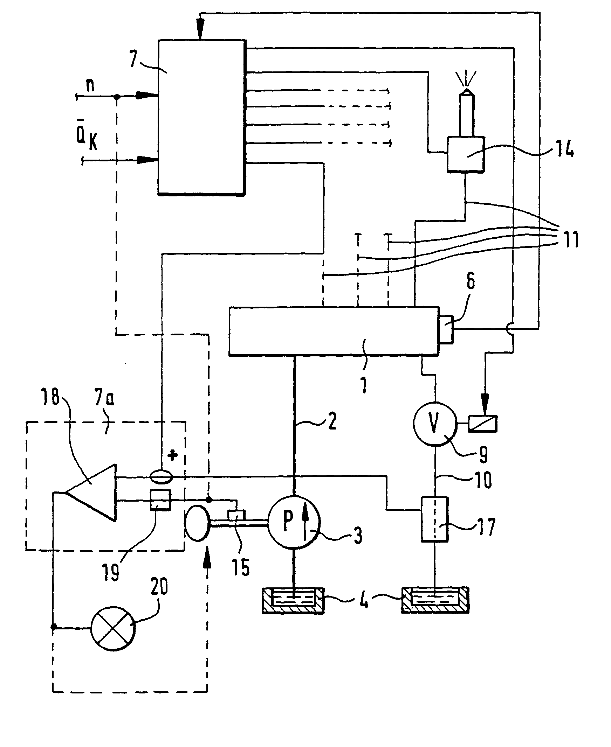

Ein Ausführungsbeispiel der Erfindung ist in der Zeichnung dargestellt und wird in der nachfolgenden Beschreibung näher erläutert.

### Beschreibung des Ausführungsbeispiels

In der Figur ist ein Kraftstoffhochdruckspeicher 1 gezeigt, der über eine Förderleitung 2 von einer Kraftstoffpumpe 3, die aus einem Kraftstoffbehälter 4 Kraftstoff ansaugt, mit Kraftstoff, der auf hohen Einspritzdruck gebracht ist, versorgt wird. Es treten dabei Drücke auf, die im wesentlichen über 1 000 bar liegen. Der Druck im Kraftstoffhochdruckspeicher wird durch einen Druckgeber 6 erfaßt, dessen Signal einer Steuereinrichtung 7 zugeführt wird, durch die bei Überschreiten eines fest eingestellten oder eines gewünschten Druckes, der abhängig von einem jeweiligen Betriebszustand der zugehörigen Brennkraftmaschine sein kann, durch ein entsprechendes Signal ein Drucksteuerventil 9 angesteuert wird. Dieses befindet sich in einer Kraftstoffrücklaufleitung 10 vom Kraftstoffhochdruckspeicher zu dem Kraftstoffbehälter 4. Vom Kraftstoffhochdruckspeicher führen ferner Druckleitungen 11 ab, die mit je einem Kraftstoffeinspritzventil 14 verbunden sind, über das zum geeigneten Zeitpunkt jeweils eine gewünschte Kraftstoffmenge an der Brennkraftmaschine eingespritzt werden kann. Die Steuerung der Kraftstoffeinspritzmenge nach Zeitpunkt und Menge erfolgt ebenfalls über die Steuereinrichtung 7, das zu dieser Steuerung Steuersignale entsprechend der Drehzahl und der Last, unter der die zugehörige Brennkraftmaschine betrieben werden soll erhält. Die Steuerung dieser Kraftstoffeinspritzmenge erfolgt z. B. in bekannter Weise durch Magnetventile, die die Verbindung zwischen dem Hochdruckspeicher und dem Einspritzventil steuern. Dabei evtl. auftretende Kraftstoff-Steuermengen, die in den Tank zurückfließen können ebenfalls über die Rücklaufleitung 10 in den Tank zurückgefördert werden.

Die Kraftstoffpumpe wird dabei z. B. synchron zu der von der Kraftstoffeinspritzeinrichtung betriebenen Brennkraftmaschine angetrieben, also mit einer Drehzahl, die auch bereits zur Steuerung der Einspritzung erfaßt wird. Die Kraftstoffpumpe kann aber auch separat durch eine speziellen Antrieb betrieben werden, und dabei kann die diesbezügliche Antriebsdrehzahl der Kraftstoffpumpe ebenfalls erfaßt werden, z. B. durch einen Drehzahlgeber 15. Mit Hilfe dieser Antriebsdrehzahl und der Tatsache, daß die Kraftstoffpumpe pro Umdrehung eine gleichbleibende Fördermenge fördert, läßt sich nun mit Hilfe dieser Drehzahl die im Kraftstoffhochdruckspeicher zugeführte Kraftstoffmenge erfassen, so daß auf eine Meßeinrichtung zur unmittelbaren Messung der geförderten Kraftstoffmenge verzichtet werden kann. Aber auch, wenn die Kraftstofförderpumpe aus bestimmten Gründen mit einem variablen Fördervolumen arbeitet, läßt sich die von dieser geförderte Kraftstoffmenge ebenfalls aus den Steuersignalen oder durch eine Mengenmeßeinrichtung erfassen.

Da es bei einem Betrieb der Kraftstoffeinspritzeinrichtung mit sehr hohen Drücken kritisch ist, wenn Undichtigkeiten im Hochdrucksystem, insbesondere am Hochdruckspeicher 1, auftreten, ist es erforderlich, die Dichtheit dieses Speichers zu überwachen. Mit Hilfe der über die Förderpumpe 3 zugeführten Kraftstoffmenge und der über die Einspritzventile 14 abgeführten Kraftstoffmenge in Verbindung mit der zur Druckregelung des Kraftstoffdrucks im Hochdruckspeicher abgeführten Kraftstoffmenge sowie der evtl. anfallenden Steuermengen für die Einspritzeinrichtung läßt sich nun eine Bilanz aus zugeführtem Kraftstoff und abgeführtem Kraftstoff aufstellen. Dazu muß jedoch die über das Drucksteuerventil abgesteuerte Kraftstoffmenge mittels einer Mengenmeßeinrichtung 17 in der Kraftstoffrücklaufleitung 10 gemessen werden. Das dieser Menge entsprechende Signal, addiert zu einem der gesamten Kraftstoffeinspritzmenge in der Zeiteinheit entsprechenden, von der Steuereinrichtung abgebbaren Signal, wird nun mit Hilfe einer Vergleichseinrichtung 18 mit dem entsprechend aufgearbeiteten Signal für die Fördermenge der Förderpumpe 3 aus dem Drehzahlsignal verglichen. Bei Abweichung von zugeführter und wieder abgeführter Kraftstoffmenge wird nun durch die Steuereinrichtung 7 a, ausgelöst durch die Vergleichseinrichtung 18, ein Signal für eine Anzeige 20 oder für einen Eingriff in den Betrieb der Kraftstoffeinspritzeinrichtung abgegeben. Dabei kann mit diesem Signal z. B. der Antrieb der Kraftstoffpumpe 3 abgeschaltet werden oder die gesamte Kraftstoffeinspritzeinrichtung in der Brennkraftmaschine stillgesetzt oder auf einen Notbetrieb reduziert werden.

Als Mengenmaßeinrichtung 17 kann in ansich bekannter Weise eine in die Kraftstoffrücklaufleitung 10 eingesetzte Drossel vorgesehen werden und dabei der Druck vor und nach der Drossel mit einander verglichen werden um daraus ein Mengensignal zu bilden. Solche Maßeinrichtungen werden z.B. in Zusammenhang mit Einspritzeinrichtungen in der DE-A-3722264 beschrieben.

## Patentansprüche

1. Verfahren zum Betrieb einer Kraftstoffeinspritzeinrichtung, bei der Kraftstoff in meßbarer Menge unter Hochdruck in einen Hochdruckspeicher (1) gefördert wird, dessen Druck durch ein Drucksteuerventil (9) gesteuert wird und dass aus dem Hochdruckspeicher Kraftstoff zur Einspritzung über Einspritzventil (14) entnommen wird, **dadurch gekennzeichnet, dass** zur Erfassung der Dichtheit des Hochdruckspeichers (1) die dem Hochdruckspeicher zugeführte Kraftstoffmenge mit der von Hochdruckspeicher abgeführten Kraftstoffmenge verglichen wird und **dass** bei einer Abweichung der Mengen von einander eine Leckage erkannt und ein Signal zur Anzeige oder Betriebsbeeinflussung der Kraftstoffeinspritzeinrichtung erzeugt wird, wobei die dem Hochdruckbereich (1) zugeführte Kraftstoffmenge durch die Erfassung der Antriebsdrehzahl der den Kraftstoff auf Hochdruck mit geometrisch konstanter Fördermenge pro Umdrehung ihrer Antriebswelle fördernden Hochdruckförderpumpe (3) erfolgt, die Erfassung der Kraftstoffeinspritzmenge in der Zeiteinheit aus Signalen zur Steuerung der Einspritzmenge erfolgt und die Erfasssung der zur Einhaltung der Drucks im Hochdruckspeicher (1) aus diesem abgesteuerten Kraftstoffmenge durch eine die abgesteuerte Kraftstoffmenge erfassende Einrichtung erfolgt.

2. Verfahren nach Anspruch 1, **dadurch gekennzeichnet, dass** die Erfassung der abgesteuerten Kraftstoffmenge durch eine die abgesteuerte Kraftstoffmenge messende Mengenmeßeinrichtung (17) erfolgt.

3. Kraftstoffeinspritzeinrichtung zur Durchführung des Verfahrens nach Anspruch 2 mit einer Hochdruckförderpumpe (3), die auf ihre Antriebsdrehzahl bezogen mit konstanter, dieser Antriebsdrehzahl zugeordneter Föderrate Kraftstoff in einen Hochdruckspeicher (1) fördert, der über mehrere Druckleitungen (11) mit je einem Einspritzventil (14) verbunden ist, wobei der Zufluß zu den einzelnen Einspritzventilen (14) durch elektrisch gesteuerte Ventile erfolgt und der Hochdruckspeicher (1) ferner über eine ein in Abhängigkeit vom Druck im Hochdruckspeicher gesteuertes Drucksteuerventil (9) aufweisende Kraftstoffrücklaufleitung (10) entlastbar ist, **dadurch gekennzeichnet, dass** in der Kraftstoffrücklaufleitung (10) ein Durchflußmengenmeßgerät (17) angeordnet ist, das mit einer Steuereinrichtung (7, 7a, 18, 19) verbunden ist, die eine Einrichtung (19) zur Erfassung des von der Hochdruckförderpumpe (3) in einer Zeiteinheit geförderten Volumens, und mit einer Einrichtung (7) zur Erfassung der in der Zeiteinheit eingespritzten Kraftstoffmenge und einer Vergleichseinrichtung (18) zur Ermittlung einer Differenz zwischen der in den Hochdruckspeicher geförderten Kraftstoffmenge und der Summe der vom Durchflußmengenmeßgerät erfaßten Kraftstoffmengen und der in der Zeiteinheit eingespritzten Kraftstoffmenge und zur Bildung eines Signals zur Anzeige oder Betriebsbeeinflussung der Kraftstoffeinspritzeinrichtung bei Auftreten einer Differenz.

4. Kraftstoffeinspritzeinrichtung nach Anspruch 3, **dadurch gekennzeichnet, dass** die Steuereinrichtung (7,7a) eine Signale für die geforderte Last (Q_{K}) und Signale für die Drehzahl (n) der Brennkraftmaschine aus einer Drehzahlsignalquelle erhaltende Kraftstoffmengensteuereinrichtung aufweist, durch die Steuersignale zur Steuerung der elektrisch gesteuerten Einspritzventile (14) erzeugt werden und diese Signale zur Erfassung der für die Einspritzung vom Hochdruckspeicher abgeführten Kraftstoffmenge der Vergleichseinrichtung (18) zugeführt werden, die ferner Signale von einer Einrichtung (19) erhält, die mit der Drehzahlsignalquelle oder mit einem Drehzahlgeber (15) der wenigstens mittelbar die Antriebsdrehzahl der Hochdruckförderpumpe erfaßt, zur Erfassung des von der Förderpumpe geförderten Volumens verbundenen ist.

5. Kraftstoffeinspritzeinrichtung nach Anspruch 3 oder 4, **dadurch gekennzeichnet, dass** das Durchflußmengenmeßgerät eine Durchflußdrossel aufweist, die in der Kraftstoffrücklaufleitung angeordnet ist und mit einer Meßeinrichtung des an ihr anstehenden Druckgefälles als Maß für die Durchflußmenge.

## Claims

1. Method of operating a fuel-injection device, in which fuel in a measurable quantity is delivered at a high pressure into a high-pressure reservoir (1) whose pressure is controlled by a pressure-control valve (9), and fuel is removed from the high-pressure reservoir for injection via an injection valve (14), **characterized in that** in order to detect the tightness of the high-pressure reservoir (1), the quantity of fuel supplied to the high-pressure reservoir is compared with the quantity of fuel removed from the high-pressure reservoir, and **in that** when the quantities differ from each other a leakage is identified and a signal is produced for display purposes or for influencing the operation of the fuel-injection device, the quantity of fuel supplied to the high-pressure region (1) being brought about by detection of the driving speed of the high-pressure delivery pump (3), which delivers the fuel at high pressure and at a geometrically constant delivery rate per revolution of its drive shaft, the detection of the quantity of fuel injected per unit of time proceeding from signals for controlling the quantity injected, and the detection of the quantity of fuel shut off from the high-pressure reservoir (1) in order to maintain the pressure therein taking place by means of a device which detects the quantity of fuel which is shut off.

2. Method according to Claim 1, **characterized in that** the detection of the quantity of fuel which is shut off is carried out by means of a quantity-measuring device (17) which measures the quantity of fuel which is shut off.

3. Fuel-injection device for carrying out the method according to Claim 2, having a high-pressure delivery pump (3) which, based on its driving speed, delivers fuel at a constant delivery rate, which is associated with this driving speed, into a high-pressure reservoir (1) which is connected via a plurality of pressure pipes (11) to a respective injection valve (14), the inflow to the individual injection valves (14) taking place through electrically controlled valves, and the high-pressure reservoir (1) furthermore being able to be relieved of load via a fuel-return pipe (10) having a pressure-control valve (9) which is controlled as a function of the pressure in the high-pressure reservoir, **characterized in that** there is arranged in the fuel-return pipe (10) a flow-quantity-measuring instrument (17) which is connected to a control device (7, 7a, 18, 19), which has a device (19) for detecting the volume delivered per unit of time by the high-pressure delivery pump (3), and to a device (7) for detecting the quantity of fuel injected per unit of time, and to a comparison device (18) for determining a difference between the quantity of fuel delivered into the high-pressure reservoir and the sum of the quantities of fuel detected by the flow-quantity-measuring instrument and the quantity of fuel injected per unit of time, and for forming a signal for display purposes or influencing the operation of the fuel-injection device when a difference occurs.

4. Fuel-injection device according to Claim 3, **characterized in that** the control device (7, 7a) has a fuel-quantity-control device which receives signals for the required load (Q_{K}) and signals for the speed (n) of the internal combustion engine from a speed-signal source and by means of which control signals for controlling the electrically controlled injection valves (14) are produced, and these signals for detecting the quantity of fuel removed from the high-pressure reservoir for injection purposes are supplied to the comparison device (18) which furthermore receives signals from a device (19) which is connected, in order to detect the volume delivered by the delivery pump, to the speed-signal source or to a speed sensor (15) which at least indirectly detects the driving speed of the high-pressure delivery pump.

5. Fuel-injection device according to Claim 3 or 4, **characterized in that** the flow-quantity-measuring instrument has a flow restrictor which is arranged in the fuel-return pipe and having a device for measuring the pressure difference prevailing at it as a measure of the flow quantity.

## Revendications

1. Procédé de mise en oeuvre d'une installation d'injection de carburant, selon lequel :
- le carburant est fourni, en quantités dosées à haute pression, à un accumulateur à haute pression (1) dont la pression est commandée par une soupape de commande de pression (9), et
- le carburant est pris dans l'accumulateur à haute pression pour être injecté par les injecteurs (14),
**caractérisé en ce que**
- pour détecter un défaut d'étanchéité de l'accumulateur à haute pression (1), on compare la quantité de carburant fournie à l'accumulateur à haute pression, à la quantité de carburant évacuée de cet accumulateur à haute pression, et
- en cas de différence entre les quantités on conclut à une fuite et on génère un signal d'affichage, ou on influence le fonctionnement de l'installation d'injection de carburant,
- la quantité de carburant fournie à l'accumulateur haute pression (1) étant obtenue en détectant la vitesse de rotation d'entraînement de la pompe à haute pression (3) qui fournit le carburant à haute pression avec un débit géométriquement constant par rotation de son arbre d'entraînement,
- la détection de la quantité de carburant injectée dans l'unité de temps se faisant à partir des signaux de commande de la quantité à injecter, et la saisie de la quantité de carburant évacuée de l'accumulateur à haute pression (1) pour y régler la pression, se faisant par une installation de mesure de la quantité de carburant évacuée pour la commande.

2. Procédé selon la revendication 1,
**caractérisé en ce que**
la détection de la quantité de carburant évacuée pour la commande se fait à l'aide d'une installation de mesure de débit (17) qui mesure la quantité de carburant évacuée pour la commande.

3. Installation d'injection de carburant pour la mise en oeuvre du procédé selon la revendication 2, comprenant :
- une pompe d'alimentation à haute pression (3) qui fournit à un accumulateur à haute pression (1) du carburant à débit constant pour sa vitesse de rotation d'entraînement,
- cet accumulateur à haute pression étant relié, par plusieurs conduites de pression (11), à chaque fois à un injecteur (14),
- l'alimentation des différents injecteurs (14) se faisant par des vannes à commande électrique, et
- l'accumulateur à haute pression (1) pouvant être évacué par une conduite de retour de carburant (13) munie d'une vanne de commande de pression (9) actionnée en fonction de la pression dans l'accumulateur à haute pression,
**caractérisée en ce qu'**
- un appareil de mesure de débit (17) équipe la conduite de retour de carburant (10),
- cet appareil étant relié à une installation de commande (7, 7a ; 18, 19) qui comporte une installation (19) pour détecter le volume fourni par unité de temps par la pompe à haute pression (3), et à une installation (7) pour détecter la quantité de carburant à injecter par unité de temps, avec un comparateur (18) pour déterminer la différence entre la quantité de carburant fournie à l'accumulateur à haute pression et la somme des quantités de carburant détectées par l'appareil de mesure de débit et des quantités de carburant injectées par unité de temps, et pour former un signal d'affichage ou un signal destiné à influencer l'installation d'injection de carburant en cas de différence.

4. Installation d'injection de carburant selon la revendication 3,
**caractérisée en ce que**
- l'installation de commande (7, 7a) comprend une installation de commande de quantité de carburant recevant des signaux de la charge demandée (Q_{K}) et des signaux du régime (n) du moteur à combustion interne à partir d'une source de signaux de vitesse de rotation, pour former les signaux de commande des injecteurs à commande électrique (14), et
- ces signaux sont appliqués au comparateur (18) pour saisir la quantité de carburant évacuée de l'accumulateur à haute pression pour l'injection, ce comparateur recevant également d'une installation (19), des signaux qui ont été fournis à partir de la source de signaux de vitesse de rotation ou d'un capteur de vitesse de rotation (15) donnant au moins indirectement la vitesse de rotation d'entraînement de la pompe d'alimentation à haute pression, pour obtenir le volume débité par la pompe d'alimentation.

5. Installation d'injection de carburant selon l'une quelconque des revendications 3 ou 4,
**caractérisée en ce que**
l'appareil de mesure de débit comporte un organe d'étranglement installé dans la conduite de retour de carburant, et une installation de mesure pour mesurer la chute de pression de part et d'autre de cet organe étranglement, afin d'obtenir une mesure du débit.
